# EUROPEAN PATENT SPECIFICATION

(11) **EP 1 718 860 B1**
(45) Date of publication and mention of the grant of the patent: **19.03.2008**
(21) Application number: 05708452.7
(22) Date of filing: 24.02.2005
(51) Int. Cl.: F02M 27/04, F02M 31/125, F02M 31/14

(54) **AIR/FUEL CONDITIONING**
LUFT-/BRENNSTOFF-KONDITIONIERUNG
CONDITIONNEMENT D'AIR/COMBUSTIBLE

(30) Priority: 26.02.2004 GB 0404189
(43) Date of publication of application: 08.11.2006
(73) Proprietor: Hyanol Limited, Llandrindod Wells Powys, LD1 6RN (GB)
(72) Inventor: Collins, Paul, Antony, Powys LD1 6RN (GB)
(74) Representative: Jackson, Derek Charles
(86) International application number: PCT/GB2005/000686
(87) International publication number: WO 2005/083256

(56) References cited:
- EP-A- 1 209 346
- WO-A-02/084098
- WO-A-03/072925
- PATENT ABSTRACTS OF JAPAN vol. 013, no. 559 (M-905), 12 December 1989 (1989-12-12) & JP 01 232156 A (HIDEYORI TAKAHASHI), 18 September 1989 (1989-09-18)

## Description

The present invention relates to an apparatus and method for conditioning air and fuel supplied to a combustor.

The invention is particularly concerned with the conditioning of air and fuel supplied to internal combustion engines for automotive or other applications and may be most usefully applied where fuel and air are injected or inducted separately into the combustion chamber(s), as in the case of diesel, GCI (gasoline direct injection) and certain gas engines.

The invention may, however, be found more generally useful for aiding combustion, increasing efficiency and/or reducing harmful emissions from prime movers, burners, furnaces or other kinds of combustor.

Various systems have been proposed which purport to improve the performance of and/or reduce emissions from internal combustion engines by electrically charging or ionising the supplied air and/or fuel, for example as known from US 4071004, US 4183337, US 4308844, US 5010869 and US 6463917.

Furthermore the document WO 03/072925 describes an air/fuel conditioning apparatus according the preamble of claim.

The present invention seeks to provide an apparatus and method whereby such aims may be more readily achieved.

In one aspect the invention accordingly resides in apparatus for conditioning air and fuel supplied to a combustor, comprising:
means for electrostatically charging air supplied to a combustor, at a first polarity, the means extending into a first duct through which, in use, air flows to the combustor;
means for electrostatically charging fuel supplied to such combustor, at opposite polarity to said first polarity, the means extending into a second duct through which, in use, fuel flows to the combustor; and
means for preheating such fuel;
wherein the apparatus further comprises an earthed electrode within a duct selected from the first duct and the second duct.

Preferably the apparatus is adapted to charge air at negative polarity and to charge fuel at positive polarity.

The charging means may in each case comprise one or more pointed electrodes adapted to be connected to electric power supply means and extending into the first duct and/or the second duct.

The earthed electrode within the first duct and/or second duct may be provided upstream of the pointed electrode(s) in the sense of the flow of air or fuel through the duct.

The fuel may be preheated by heat exchange with fluid heated by the combustor. Additionally, or alternatively, the fuel may be preheated by electrically powered means. When both are provided, the apparatus may further comprise control means adapted to operate the electrically powered heating means when the fluid heat exchange means are ineffective to preheat the fuel to a specified temperature (for example, when the combustor has not yet reached its normal working temperature).

The invention also resides in a combustor equipped with air and fuel conditioning apparatus as defined above.

The invention also resides in a method of conditioning air and fuel supplied to a combustor, comprising the steps of:
electrostatically charging such air at a first polarity within a first duct through which, in use, air flows to the combustor;
electrostatically charging such fuel at opposite polarity to said first polarity within a second duct through which, in use, fuel flows to the combustor; and
preheating such fuel;
characterised by providing an earthed electrode within a duct and/or second duct.

These and other features of the present invention will now be more particularly described, by way of example, with reference to the accompanying schematic drawings in which:
Figure 1 is a section through the air conditioning unit in one embodiment of apparatus according to the invention; and
Figure 2 is a section through the fuel conditioning unit of the apparatus.

The drawings illustrate examples of air and fuel conditioning units which may typically be used in conjunction with a diesel or other internal combustion engine.

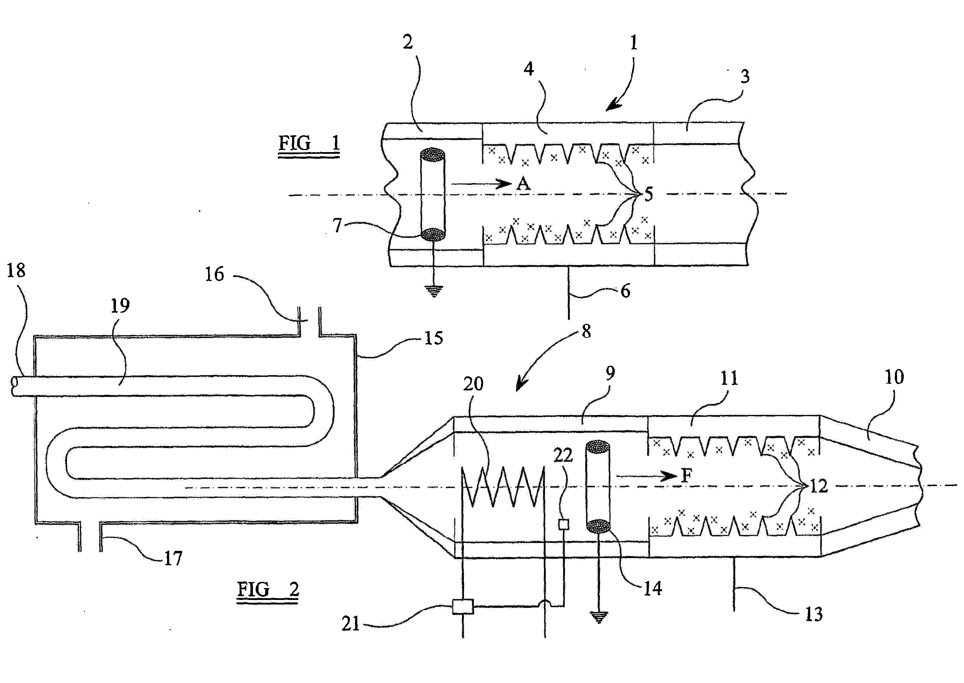

The unit 1 illustrated in Figure 1 is intended to be inserted in the air induction system of the engine, downstream of a filter and as close to the air inlets to the engine's combustion chambers as practicable.

It comprises a duct having an inlet section 2 and outlet section 3 both of dielectric material, through which air passes in the direction of the arrow 'A' on its way to the engine. Between the sections 2 and 3 there is a section of metal duct 4 formed with a plurality of pointed electrodes 5 extending into the interior of the duct.

A cable 6 connects the duct section 4 to a power supply (not shown) which applies a low-current high DC or pulsed voltage (typically of several kV to 1 MV) of negative polarity to each electrode 5.

The consequent surface electric field concentrated at the tip of each electrode results in corona discharges and the generation of negatively charged particles (ions) in the air flowing through the duct. This effect is enhanced by the presence of an earthed electrode, such as the ring electrode indicated at 7, within the duct adjacent to the electrodes 5 in the upstream direction, the natural direction of flow of the ions generated being away from this earth.

The unit 8 illustrated in Figure 2 is intended to be inserted in the fuel line to the engine, preferably downstream of the fuel pump and as close to the fuel injectors to the engine's combustion chambers as practicable.

It comprises a duct having an inlet section 9 and outlet section 10 both of dielectric material, through which fuel passes in the direction of the arrow 'F' on its way to the engine. Between the sections 9 and 10 there is a section of metal duct 11 formed with a plurality of pointed electrodes 12 extending into the interior of the duct.

A cable 13 connects the duct section 11 to a power supply (not shown) which applies a low-current high DC or pulsed voltage (typically of several kV to 1 MV) of positive polarity to each electrode 12.

The consequent surface electric field concentrated at the tip of each electrode results in corona discharges and the generation of positively charged particles (ions) in the fuel flowing through the duct. This effect may be enhanced by the presence of an earthed electrode, such as the ring electrode indicated at 14, within the duct adjacent to the electrodes 12 in the upstream direction, the natural direction of flow of the ions generated being away from this earth.

In addition to conditioning the fuel by ionisation in this apparatus it is also preheated, and two separate means are illustrated in Figure 2 for this purpose.

The first comprises a water jacket 15 through which hot water from the engine's cooling system is circulated, having an inlet 16 and an outlet 17. Fuel flows from an inlet 18 through a serpentine passageway 19 within the jacket 15, picking up heat from the water prior to its passage through the duct 9, 11, 10.

This will not be effective to heat the fuel until the engine has reached its normal working temperature, however, so to cater for the cold start condition an electrically powered fuel heater is also provided. This is illustrated schematically in Figure 2 as an electrical heating element 20 within the duct section 9, controlled by a thermostat 21 in response to a fuel temperature sensor 22.

The fuel heating arrangement shown in Figure 2 may be set up such that when starting the engine from cold the electric heater 20 is initially operative, and is switched off under thermostatic control when the engine has heated up and preheated fuel above a specified temperature begins to be delivered from the water heater 15.

In other embodiments, however, the water heater may be dispensed with and fuel preheating is accomplished solely by one or more electric heaters. In the case of diesel fuel, for example, it is believed that preheating to a temperature in the region of 200°C may be beneficial, which could not readily be accomplished through use of engine coolant as the heat source.

In another variant, the separate earthed electrode 14 in the fuel conditioning unit may be functionally replaced by the casing of an electric heater such as 20.

Although not all the effects of air and fuel conditioning in an apparatus as exemplified above are fully understood at present, it is believed that applying electrical charges of like polarity to the fuel assists in the subsequent atomisation and dispersal of the fuel into finer droplets within the engine.

Preheating of the fuel is believed to facilitate the ionisation process and enhance particle break up. Furthermore by charging the air for combustion at the opposite polarity to the fuel, subsequent intermixing of the fuel and air should be more rapid and more complete. The consequences are that combustion can be initiated more reliably and the mixture can burn more completely, leading in turn to better fuel economy, higher power output and/or reduction in the amounts of unburnt hydrocarbon, carbon monoxide and particle emissions.

Lower exhaust temperatures and lower formation of oxides of nitrogen may also be realised.

## Claims

1. Apparatus for conditioning air and fuel supplied to a combustor, comprising:
means (5) for electrostatically charging air supplied to a combustor, at a first polarity, the means extending into a first duct (2, 3, 4) through which, in use, air flows to the combustor;
means (12) for electrostatically charging fuel supplied to such combustor, at opposite polarity to said first polarity, the means extending into a second duct (9, 10, 11) through which, in use, fuel flows to the combustor; and
means (15, 19; 20) for preheating such fuel;
**characterised by** further comprising an earthed electrode (7; 14) within the first duct and/or the second duct.

2. Apparatus according to claim 1, **characterised by** being adapted to charge air at negative polarity and to charge fuel at positive polarity.

3. Apparatus according to claim 1 or claim 2, **characterised in that** said means for electrostatically charging air comprises one or more pointed electrodes (5) adapted to be connected to electronic power supply means and extending into the first duct (2, 3, 4).

4. Apparatus according to claim 3, **characterised in that** the first earthed electrode (7) within the first duct (2, 3, 4) is upstream of said pointed electrode(s) (5) in the sense of flow of air through the first duct.

5. Apparatus according to any preceding claim, **characterised in that** said means for electrostatically charging fuel comprises one or more pointed electrodes (12) adapted to be connected to electric power supply means and extending into the second duct (9, 10, 11).

6. Apparatus according to claim 5, **characterised in that** the second earthed electrode (14) within the second duct (9, 10, 11) is upstream of said pointed electrode(s) (12) in the sense of flow of fuel through such duct.

7. Apparatus according to any preceding claim, **characterised in that** said preheating means (15, 19; 20) are located upstream of said means (12) for electrostatically charging fuel in the sense of flow of fuel to the combustor.

8. Apparatus according to any preceding claim, **characterised in that** said preheating means comprise means (15, 19) for preheating such fuel by heat exchange with fluid heated by the combustor.

9. Apparatus according to any preceding claim **characterised in that** said preheating means comprise electrically powered heating means (20).

10. Apparatus according to claim 9, **characterised in that** said electrically powered heating means comprise an element (20) disposed within the duct (9, 10, 11) through which, in use, fuel flows to the combustor which serves also as said earthed electrode (14).

11. Apparatus according to claim 8, 9 or 10, **characterised by** further comprising control means (21, 22) adapted to operate said electrically powered heating means (20) when said fluid heat exchange means (15, 19) are ineffective to preheat such fuel to a specified temperature.

12. A combustor **characterised by** being equipped with apparatus according to any preceding claim for conditioning air and fuel supplied to the same.

13. A combustor according to claim 12, **characterised by** being an internal combustion engine.

14. A method of conditioning air and fuel supplied to a combustor, comprising the steps of:
electrostatically charging such air at a first polarity within a first duct (2, 3, 4) through which, in use, air flows to the combustor;
electrostatically charging such fuel at opposite polarity to said first polarity within a second duct (9, 10, 11) through which, in use, fuel flows to the combustor; and
preheating such fuel;
**characterised by** providing an earthed electrode (7; 14) within a duct selected from the first duct and the second duct.

15. A method according to claim 14, **characterised by** being performed by means of apparatus according to any one of claims 2 to 12.

## Patentansprüche

1. Vorrichtung zur Aufbereitung von Luft und Kraftstoff, die einer Verbrennungsvorrichtung zugeführt werden, umfassend:
Mittel (5) zum elektrostatischen Aufladen von Luft, die einer Verbrennungsvorrichtung zugeführt wird, mit einer ersten Polarität, wobei das Mittel sich in einen ersten Kanal (2, 3, 4) hinein erstreckt, durch den im Gebrauch Luft zur Verbrennungsvorrichtung strömt;
Mittel (12) zum elektrostatischen Aufladen von Kraftstoff, der einer solchen Verbrennungsvorrichtung zugeführt wird, mit der genannten ersten Polarität entgegengesetzter Polarität, wobei das Mittel sich in einen zweiten Kanal (9, 10, 11) hinein erstreckt, durch den im Gebrauch Kraftstoff zur Verbrennungsvorrichtung strömt; und
Mittel (15, 19; 20) zum Vorwärmen von derartigem Kraftstoff;
**dadurch gekennzeichnet, dass** die Vorrichtung ferner eine geerdete Elektrode (7; 14) in dem ersten Kanal und/oder dem zweiten Kanal umfasst.

2. Vorrichtung nach Anspruch 1, **dadurch gekennzeichnet, dass** sie zum Aufladen von Luft mit negativer Polarität und zum Aufladen von Kraftstoff mit positiver Polarität ausgeführt ist.

3. Vorrichtung nach Anspruch 1 oder Anspruch 2, **dadurch gekennzeichnet, dass** das genannte Mittel zum elektrostatischen Aufladen von Luft eine oder mehrere spitze Elektroden (5) umfasst, die zum Anschluss an elektronische Stromversorgungsvorrichtungen ausgeführt sind und sich in den ersten Kanal (2, 3, 4) erstrecken.

4. Vorrichtung nach Anspruch 3, **dadurch gekennzeichnet, dass** sich die erste geerdete Elektrode (7) im ersten Kanal (2, 3, 4) stromaufwärts von der/den genannten spitzen Elektrode(n) (5) in der Richtung der Luftströmung durch den ersten Kanal befindet.

5. Vorrichtung nach einem der vorhergehenden Ansprüche, **dadurch gekennzeichnet, dass** das genannte Mittel zum elektrostatischen Aufladen von Kraftstoff eine oder mehrere spitze Elektroden (12) umfasst, die zum Anschluss an elektrische Stromversorgungsvorrichtungen ausgeführt sind und sich in den zweiten Kanal (9, 10, 11) erstrecken.

6. Vorrichtung nach Anspruch 5, **dadurch gekennzeichnet, dass** sich die zweite geerdete Elektrode (14) im zweiten Kanal (9, 10, 11) stromaufwärts von der/den genannten spitzen Elektrode(n) (12) in der Richtung der Kraftstoffströmung durch diesen Kanal befindet.

7. Vorrichtung nach einem der vorhergehenden Ansprüche, **dadurch gekennzeichnet, dass** die genannten Mittel zum Vorwärmen (15, 19; 20) sich stromaufwärts von dem genannten Mittel (12) zum elektrostatischen Aufladen von Kraftstoff in der Richtung der Kraftstoffströmung zur Verbrennungsvorrichtung befinden.

8. Vorrichtung nach einem der vorhergehenden Ansprüche, **dadurch gekennzeichnet, dass** die genannten Mittel zum Vorwärmen Mittel (15, 19) zum Vorwärmen von derartigem Kraftstoff durch Wärmeaustausch mit von der Verbrennungsvorrichtung erwärmtem Fluid umfassen.

9. Vorrichtung nach einem der vorhergehenden Ansprüche, **dadurch gekennzeichnet, dass** die genannten Mittel zum Vorwärmen elektrisch betriebene Heizmittel (20) umfassen.

10. Vorrichtung nach Anspruch 9, **dadurch gekennzeichnet, dass** die genannten elektrisch betriebenen Heizmittel ein Element (20) umfassen, das in dem Kanal (9, 10, 11) angeordnet ist, durch welchen im Gebrauch Kraftstoff zur Verbrennungsvorrichtung strömt, welches auch als die genannte geerdete Elektrode (14) dient.

11. Vorrichtung nach Anspruch 8, 9 oder 10, **dadurch gekennzeichnet, dass** sie ferner Steuermittel (21, 22) umfasst, die zum Betreiben der genannten elektrisch betriebenen Heizmittel (20) ausgeführt sind, wenn die genannten Fluidwärmeaustauschmittel (15, 19) zum Vorwärmen von derartigem Kraftstoff auf eine vorgeschriebene Temperatur unwirksam sind.

12. Verbrennungsvorrichtung, **dadurch gekennzeichnet, dass** sie mit einer Vorrichtung nach einem der vorhergehenden Ansprüche zur Aufbereitung von Luft und Kraftstoff, die dieser zugeführt werden, ausgerüstet ist.

13. Verbrennungsvorrichtung nach Anspruch 12, **dadurch gekennzeichnet, dass** sie eine Verbrennungskraftmaschine ist.

14. Verfahren zur Aufbereitung von Luft und Kraftstoff, die einer Verbrennungsvorrichtung zugeführt werden, welches die folgenden Schritte umfasst:
elektrostatisches Aufladen derartiger Luft mit einer ersten Polarität in einem ersten Kanal (2, 3, 4), durch den im Gebrauch Luft zur Verbrennungsvorrichtung strömt;
elektrostatisches Aufladen von derartigem Kraftstoff mit der genannten ersten Polarität entgegengesetzter Polarität in einem zweiten Kanal (9, 10, 11), durch den im Gebrauch Kraftstoff zur Verbrennungsvorrichtung strömt; und
Vorwärmen von derartigem Kraftstoff;
**dadurch gekennzeichnet**, das eine geerdete Elektrode (7; 14) in einem aus dem ersten Kanal und dem zweiten Kanal ausgewählten Kanal bereitgestellt wird.

15. Verfahren nach Anspruch 14, **dadurch gekennzeichnet, dass** es mittels einer Vorrichtung nach einem der Ansprüche 2 bis 12 durchgeführt wird.

## Revendications

1. Appareil pour conditionner l'air et le carburant fournis à un dispositif de combustion, comprenant :
un moyen (5) pour donner une charge électrostatique à l'air fourni à un dispositif de combustion, à une première polarité, le moyen étant disposé dans un premier conduit (2, 3, 4) dans lequel, en utilisation, l'air circule vers le dispositif de combustion ;
un moyen (12) pour donner une charge électrostatique au carburant fourni audit dispositif de combustion, à une polarité opposée à ladite première polarité, le moyen étant disposé dans un deuxième conduit (9, 10, 11) dans lequel, en utilisation, le carburant circule vers le dispositif de combustion ; et
des moyens (15, 19, 20) pour préchauffer ledit carburant ;
**caractérisé en ce qu'**il comprend en outre une électrode reliée à la masse (7, 14) à l'intérieur du premier conduit et/ou du deuxième conduit.

2. Appareil selon la revendication 1, **caractérisé en ce qu'**il est adapté pour charger l'air à une polarité négative et pour charger le carburant à une polarité positive.

3. Appareil selon la revendication 1 ou la revendication 2, **caractérisé en ce que** ledit moyen pour donner à l'air une charge électrostatique comprend une ou plusieurs électrodes pointues (5) adaptées pour être connectées à un moyen d'alimentation électronique et disposées dans le premier conduit (2, 3, 4).

4. Appareil selon la revendication 3, **caractérisé en ce que** la première électrode reliée à la masse (7) à l'intérieur du premier conduit (2, 3, 4) est en amont desdites électrodes pointues (5) par rapport au sens de circulation de l'air dans le premier conduit.

5. Appareil selon l'une quelconque des revendications précédentes, **caractérisé en ce que** ledit moyen pour donner au carburant une charge électrostatique comprend une ou plusieurs électrodes pointues (12) adaptées pour être connectées au moyen d'alimentation électrique et disposées dans le deuxième conduit (9, 10, 11).

6. Appareil selon la revendication 5, **caractérisé en ce que** la deuxième électrode reliée à la masse (14) à l'intérieur du deuxième conduit (9, 10, 11) est en amont desdites électrodes pointues (12) par rapport au sens de circulation du carburant dans ledit conduit.

7. Appareil selon l'une quelconque des revendications précédentes, **caractérisé en ce que** lesdits moyens de préchauffage (15, 19, 20) sont situés en amont dudit moyen (12) pour donner une charge électrostatique au carburant par rapport au sens de circulation du carburant vers le dispositif de combustion.

8. Appareil selon l'une quelconque des revendications précédentes, **caractérisé en ce que** ledit moyen de préchauffage comprend des moyens (15, 19) pour préchauffer ledit carburant par échange de chaleur avec un fluide chauffé par le dispositif de combustion.

9. Appareil selon l'une quelconque des revendications précédentes, **caractérisé en ce que** lesdits moyens de préchauffage comprennent un moyen de chauffage électrique (20) .

10. Appareil selon la revendication 9, **caractérisé en ce que** ledit moyen de chauffage électrique comprend un élément (20) disposé à l'intérieur du conduit (9, 10, 11) dans lequel, en utilisation, le carburant circule vers le dispositif de combustion qui joue aussi le rôle de ladite électrode reliée à la masse (14).

11. Appareil selon la revendication 8, 9 ou 10, **caractérisé en ce qu'**il comprend en outre un moyen de commande (21, 22) adapté pour actionner ledit moyen de chauffage électrique (20) lorsque lesdits moyens d'échange de chaleur du fluide (15, 19) sont inefficaces pour préchauffer ledit carburant à une température spécifiée.

12. Dispositif de combustion **caractérisé en ce qu'**il est équipé d'un appareil selon l'une quelconque des revendications précédentes pour conditionner l'air et le carburant qui lui sont fournis.

13. Dispositif de combustion selon la revendication 12, **caractérisé en ce qu'**il est un moteur à combustion interne.

14. Procédé de conditionnement de l'air et du carburant fournis à un dispositif de combustion, comprenant les étapes consistant à :
donner une charge électrostatique audit air, à une première polarité, à l'intérieur d'un premier conduit (2, 3, 4) dans lequel, en utilisation, l'air circule vers le dispositif de combustion ;
donner une charge électrostatique audit carburant, à une polarité opposée à ladite première polarité, à l'intérieur d'un deuxième conduit (9, 10, 11) dans lequel, en utilisation, le carburant circule vers le dispositif de combustion ; et
préchauffer ledit carburant ;
**caractérisé en ce qu'**une électrode reliée à la masse (7, 14) est prévue à l'intérieur d'un conduit sélectionné entre le premier conduit et le deuxième conduit.

15. Procédé selon la revendication 14, **caractérisé en ce qu'**il est mis en oeuvre au moyen d'un appareil selon l'une quelconque des revendications 2 à 12.
